# EUROPÄISCHE PATENTSCHRIFT

(11) **EP 4 389 424 B1**
(45) Veröffentlichungstag und Bekanntmachung des Hinweises auf die Patenterteilung: **19.08.2026**
(21) Anmeldenummer: 22216377.6
(22) Anmeldetag: 23.12.2022
(51) Int. Cl.: B41F 15/16, B41F 15/20, B41F 15/08, B41F 15/36, B29C 64/10, B29C 64/20

(54) **MULTISEGMENT-DRUCKTISCH**
MULTI-SEGMENT PRINTING TABLE
TABLE D'IMPRESSION MULTI-SEGMENTS

(43) Veröffentlichungstag der Anmeldung: 26.06.2024
(73) Patentinhaber: STEREON Metals Hermsdorf GmbH, 07629 Hermsdorf (DE)
(72) Erfinder: STIEBRITZ, Guido, 07751 Jena (DE); KNIPPSCHEER, Sven, 87629 Füssen (DE); DRONHOFER, André, 07749 Jena (DE); LAUTERBACH, Holger, 95339 Wirsberg (DE)
(74) Vertreter: Patentanwälte Dr. Keller, Schwertfeger Partnerschaft mbB

(56) Entgegenhaltungen:
- WO-A1-2021/112692
- DE-A1- 102019 123 128

## Beschreibung

Die vorliegende Erfindung betrifft einen Drucktisch, ausgebildet für den Einsatz in einer Siebdruckvorrichtung, sowie eine Siebdruckvorrichtung mit einem solchen Drucktisch, wobei die Siebdruckvorrichtung für den dreidimensionalen Siebdruck ausgelegt ist.

Dreidimensionale Siebdruckverfahren werden beispielsweise eingesetzt, um dreidimensionale Bauteile bzw. Formkörper herzustellen. Mit Hilfe dieses Verfahrens ist es insbesondere möglich, dreidimensionale Grünlinge aus einem metallischen oder keramischen Pulver herzustellen. Hierbei wird mittels eines Druckverfahrens sukzessive Material in Form einer Paste Schicht für Schicht aufgetragen, bis das Bauteil bzw. der Grünling in der gewünschten Höhe angefertigt ist.

Ein wesentlicher Bestandteil einer Siebdruckvorrichtung ist das Siebwerkzeug, welches einen Siebrahmen und ein Siebelement umfasst, wobei das Siebelement üblicherweise aus einem Verbund aus einem Siebgewebe und einer auf das Siebgewebe aufgebrachten Beschichtung, in der das Layout des zu druckenden Bauteils eingearbeitet ist, besteht. Jedem beschichteten Siebgewebe ist somit ein Layout zugeordnet. Die Beschichtung ist für die Druckpaste undurchlässig. Das Layout gibt vor, welche Bereiche im Siebgewebe freigehalten und somit nicht beschichtet sind, so dass die Druckpaste durch das Siebgewebe hindurchgelangen kann. Das Siebelement ist mit dem Siebrahmen fest verbunden, insbesondere mit Spannung auf den Siebrahmen geklebt.

Im Detail wird zur Herstellung eines Bauteils bzw. Grünlings die Paste, bei der er sich in der Regel um eine Suspension handelt, auf das Siebelement gegeben und mittels eines Flutrakels verteilt. Anschließend wird die Paste mit Hilfe eines Druckrakels durch das Siebelement hindurchgedrückt. Bei diesem Verfahrensschritt gelangt die Paste auf ein Drucksubstrat auf einem Drucktisch und bildet eine Materialschicht des herzustellenden Formteils. Die so erzeugte Materialschicht des herzustellenden Formteils wird dann in der Regel weiterbearbeitet. Insbesondere wird die Schicht ausgehärtet. Dies erfolgt beispielsweise durch Trocknung oder UV-Bestrahlung.

Diese soeben beschriebenen Schritte werden so lange wiederholt, bis die gewünschte Höhe des Erzeugnisses erreicht ist. Um verschiedene Konturen in dem Druckerzeugnis zu erzielen, kann es vorgesehen sein, dass das Siebelement, insbesondere das beschichtete und mit einem Layout versehene Siebgewebe zwischenzeitlich gewechselt wird.

Das so erzeugte dreidimensionale Druckerzeugnis kann dann wunschgemäß eingesetzt oder, falls notwendig, mechanisch oder in einer anderen Form weiterbearbeitet werden.

Handelt es sich bei dem so erzeugten dreidimensionalen Druckerzeugnis um einen Grünling, kann dieser anschließend einer Wärmebehandlung unterzogen werden, insbesondere gesintert werden.

Dieses Verfahren ist besonders zur Herstellung von Bau- bzw. Formteilen geeignet, bei denen sich die Form bzw. der Querschnitt entlang einer Längsachse nicht verändert, da dann das Bau- bzw. Formteil Schicht für Schicht entlang der Längsachse gedruckt werden kann, ohne dass ein Wechsel des Siebelements notwendig ist.

Ändert sich die Form eines Bau- bzw. Formteils entlang der Längsachse beispielsweise aufgrund von Hinterschneidungen oder Ausbuchtungen oder weil das Formteil breiter oder schmäler wird, muss das Siebwerkzeug oder zumindest das beschichtete und mit einem Layout versehene Siebgewebe entsprechend gewechselt werden. Dies ist mit unerwünschten Verzögerungen des Herstellprozesses verbunden und erfordert in der Regel manuelle Arbeitsschritte.

Um eine möglichst große Stückzahl an Bauteilen in möglichst kurzer Zeit herzustellen, ist man dazu übergegangen, auf einem Drucktisch gleichzeitig mehrere Bau- bzw. Formteil zu erzeugen, insbesondere zu drucken. Die herzustellenden Bau- bzw. Formteil werden nebeneinander auf dem Drucktisch erzeugt, wobei das Layout des beschichteten Siebgewebes entsprechend gestaltet ist, so dass mehrere Bau- bzw. Formteile nebeneinander auf dem Drucktisch erzeugt werden können. So sind beispielsweise auf dem beschichteten Siebgewebe mehrere gleichartige Masken vorhanden, um mehrere Bau- bzw. Formteile nebeneinander auf einem feststehenden Drucktisch erzeugen zu können.

Zur Herstellung von Formteilen, die entlang ihrer Längsachse verdreht sind, wie etwa schraubenartige oder helixartige Formteile, kommt dieses Verfahren an seine Grenzen, da das Layout und somit das beschichtete Siebgewebe regelmäßig, im Extremfall sogar nach jedem Druckschritt gewechselt werden muss. Zwar ändert sich die Kontur und/oder Größe des Formteils im Querschnitt nicht bzw. nicht sehr häufig, jedoch die Orientierung des Formteils. Für eine Massenfertigung von Formteilen, die entlang ihrer Längsachse verdreht sind, ist dieses Verfahren daher zu kostenintensiv.

Zur Herstellung dieser Formteile auf einem feststehenden Drucktisch kann es somit wie eben beschrieben notwendig sein, das Siebwerkzeug oder zumindest das mit einem Layout versehene Siebgewebe nach jedem Druckschritt zu wechseln. Alternativ kann wie in der DE 10 2019 123 128 A1 oder der WO 2011/112692 A1 beschrieben, entweder der gesamte Drucktisch oder der gesamte Siebrahmen gedreht werden, so dass das Siebelement, insbesondere das mit einem Layout versehene Siebgewebe nur dann gewechselt werden muss, wenn sich die Kontur und/oder Größe des Formteils von einer Druckschicht zur nächsten ändert.

Dies führt jedoch dazu, dass entweder nur ein mittig auf dem Drucktisch angeordnetes Bauteil bzw. Formteil erzeugt werden kann, was für die Massenfertigung von Formteilen ineffektiv ist, oder eine sehr aufwändige Abstimmung zwischen dem Layout des beschichteten Siebgewebes und der Position des zu erzeugenden Formteils auf dem Drucktisch durchgeführt werden muss. Beispielsweise können Siebwerkzeuge mit unterschiedlichen Layouts vorgesehen sein, die gegenüber dem Drucktisch gedreht und/oder verschoben werden, wobei zusätzlich oder alternativ der Drucktisch gedreht und/oder verschoben werden kann. Je aufwändiger die Abstimmung zwischen dem Layout des beschichten Siebgewebes und der Position des zu erzeugenden Formteils auf dem Drucktisch ist, desto höher ist auch die Gefahr von Unstimmigkeiten, die auf die Qualität des Formkörpers einen Einfluss haben. So müssen solche Anlagen, bei denen mehrere Formteile gleichzeitig hergestellt werden, mit einer sehr hohen Präzision arbeiten, um eine Vielzahl von Formteilen mit geringen Abweichungen herzustellen. Bei diesen Verfahren ist damit zu rechnen, dass die Ausschussrate vergleichsweise hoch ist.

Die Herstellung einer Vielzahl von Bau- bzw. Formteilen mit einer Verdrehung entlang der Längsachse ist somit sehr aufwändig.

Es ist Aufgabe der vorliegenden Erfindung, eine Vorrichtung bereitzustellen, mit Hilfe derer es möglich ist, mittels eines dreidimensionalen Siebdruckverfahrens schnell und günstig eine Vielzahl von Bauteilen bzw. allgemein eine Vielzahl von Formkörpern, die entlang einer Längsachse gedreht sind, herzustellen.

Insbesondere ist es Aufgabe der vorliegenden Erfindung, eine Vorrichtung bereitzustellen, mit Hilfe derer es möglich ist, mittels eines dreidimensionalen Siebdruckverfahrens schnell und günstig eine Vielzahl von Bauteilen bzw. allgemein eine Vielzahl von Formkörpern, die entlang ihrer Mittelachse gedreht sind, wie etwa schraubenartige, propellerartige oder helixförmige Formkörper, in einer hochwertigen Qualität herzustellen.

Weiterhin ist es Aufgabe der vorliegenden Erfindung, eine Vorrichtung zur Herstellung von Formkörpern bereitzustellen, welche es ermöglicht, Formkörper, die entlang ihrer Längsachse gedreht sind, möglichst vollautomatisch herzustellen.

Erfindungsgemäß wird die Aufgabe gelöst durch einen Drucktisch gemäß Anspruch 1, nämlich einen Drucktisch ausgebildet für den Einsatz in einer für den dreidimensionalen Siebdruck ausgelegten Siebdruckvorrichtung, wobei der Drucktisch eine Vielzahl von Druckpositionen aufweist, an denen ein Formkörper erzeugt werden kann, wobei der Drucktisch wenigstens zwei Segmente und eine Verstellvorrichtung aufweist, wobei jedes Segment jeweils eine Druckposition enthält und gegenüber dem Drucktisch drehbar ist und wobei die Verstellvorrichtung ausgelegt ist, die wenigstens zwei Segmente gegenüber dem Drucktisch zu drehen.

Unter Druckposition wird hier die Stelle verstanden, an der der Formkörper sukzessive auf dem Drucktisch gebildet wird.

Der Austausch des Siebelements, welches ein mit einem Layout versehenes Siebgewebe aufweist, ist bei der Herstellung eines Formkörpers mithilfe dieses Drucktisches nur dann notwendig, wenn sich die Kontur und/oder Größe des Querschnitts des Formkörpers von einer gedruckten Materiallage zur nächsten gedruckten Materiallage verändert. Ein Austausch des Layouts und somit des beschichteten Siebgewebes aufgrund einer reinen Änderung der Orientierung einer Querschnittsform von einem Druckschritt zum nächsten ist nicht notwendig.

Mit Hilfe dieses Drucktisches ist es daher einfach möglich, mehrere Formkörper herzustellen, bei denen sich die Kontur und Größe des Querschnitts im Vergleich zur Orientierung des Querschnitts von einer gedruckten Materiallage zur nächsten Materiallage selten ändern. Da die Anzahl der Wechsel des Siebelements im Vergleich zu anderen Siebdruckverfahren dadurch deutlich verringert ist, kann die Produktionsgeschwindigkeit dadurch erhöht werden. Bei der Herstellung dieser Art von Formkörpern werden der Drucktisch und das Siebwerkzeug/Siebelement ortsfest gehalten, nur die Segmente selbst werden gedreht, so dass die Ausrichtung von Drucktisch und Siebelement vergleichsweise einfach ist. Qualitätsschwankungen der Formkörper aufgrund von ungenauen Positionierungen während des Druckprozesses treten daher deutlich seltener auf als bei bisher bekannten Siebdruckanlagen.

Vorzugsweise weist ein Segment eine Drehachse auf, die senkrecht zur Oberfläche des Drucktisches ausgerichtet ist. Dieser Drucktisch eignet sich daher besonders für die Herstellung von Formkörpern oder Bauteilen, die entlang ihrer Mittelachse schraubenförmig oder helixförmig gedreht sind. Besonderes ideal ist dieser Drucktisch bei gedrehten Formkörpern, bei denen sich die Querschnittsform des Formkörpers entlang der Längsachse des Formkörpers nicht ändert. In diesem Fall ist es nicht notwendig, das mit einem Layout versehene, beschichtete Siebgewebe während des gesamten Herstellprozesses des Formkörpers auszutauschen, so dass Verzögerungszeiten bzw. Prozessstillstandszeiten aufgrund eines Wechsels des Siebelements nicht vorhanden sind. Aufgrund des nicht mehr notwendigen Wechsels der Siebelemente lässt sich die Herstellung dieser Art von Formkörpern dadurch sogar vollautomatisieren.

Bei einer bevorzugten Ausführungsform ist die Verstellvorrichtung ausgelegt, die wenigstens zwei Segmente gleichzeitig zu drehen. Hierdurch kann die Produktionsgeschwindigkeit erhöht werden.

Es ist weiter von Vorteil, dass die Verstellvorrichtung ausgelegt ist, die wenigstens zwei Segmente unter dem gleichen Winkel zu drehen. Ist beispielsweise das Layout des beschichteten Siebgewebes ein regelmäßiges Muster, so dass in einem einzelnen Druckschritt eine Vielzahl identischer Muster hergestellt wird, führt die Tatsache, dass die Segmente immer unter dem gleichen Winkel gedreht werden, dazu, dass die Formkörper untereinander, wenn überhaupt, nur eine sehr geringe Abweichung aufweisen. Es kann somit eine Vielzahl nahezu identischer Formkörper unter Umständen sogar vollautomatisch hergestellt werden.

Zur Betätigung der Verstellvorrichtung kann die Verstellvorrichtung einen Motor, insbesondere einen Schrittmotor umfassen. Alternativ kann die Verstellvorrichtung wenigsten einen der folgenden Aktuatoren umfassen: pneumatischer Aktuator, hydraulischer Aktuator, piezoelektrischer Aktuator.

Es ist vorgesehen, dass die Verstellvorrichtung jedes Segment einzeln antreibt. Dies ermöglicht eine sehr hohe Flexibilität bei der Einstellung der einzelnen Segmente. Die Steuerung ist jedoch hierfür recht aufwändig und fehleranfällig, wenn eine Vielzahl identischer Formkörper gleichzeitig hergestellt werden soll.

Um die Segmente einfach synchron anzutreiben zu können, ist es daher von Vorteil, dass eine Verstellvorrichtung vorgesehen ist, die ein Getriebe umfasst, das ausgelegt ist, die wenigstens zwei Segmente gleichzeitig zu drehen. Beispielsweise kann das Getriebe ein Zahnradsystem oder ein Riemengetriebe sein.

Bei einer bevorzugten Ausführungsform umfasst wenigstens ein Segment eine kreisförmige Scheibe oder einen kreisförmigen Teller, wobei die Scheibe oder der Teller vorzugsweise flächenbündig im Drucktisch angeordnet ist.

Da sich das Segment gegenüber dem Drucktisch drehen kann, ist es insbesondere dann, wenn das Segment ganz oder teilweise im Drucktisch eingelassen ist, von Vorteil, dass das Segment mit Spiel in einer Aussparung des Drucktisches angeordnet ist.

Um zu gewährleisten, dass der Formkörper während des Herstellungsprozesses sicher auf dem Segment gehalten wird, ist es von Vorteil, dass wenigstens ein Segment Mittel zum Fixieren des Formkörpers umfasst. Als Mittel zum Fixieren eignen sich beispielsweise mechanische Mittel wie etwa Klemmen oder Schrauben. Bei einem geeigneten Substrat oder einer Paste, welches/welche selbst magnetisch ist, können am Drucktisch auch magnetische Mittel zum Fixieren der Druckerzeugnisse vorgesehen werden. Alternativ kann der Formkörper während des Herstellungsprozesses mittels Adhäsion oder Unterdruck auf dem Segment gehalten werden.

Um möglichst viele gedrehte Formkörper herzustellen, ist es bevorzugt, dass eine Vielzahl von Segmenten vorgesehen ist, die jeweils eine Druckposition enthalten und gegenüber dem Drucktisch drehbar sind, wobei die Verstellvorrichtung ausgelegt ist, die Vielzahl von Segmenten gegenüber dem Drucktisch zu drehen. Die Verstellvorrichtung kann ausgelegt sein, die Segmente unter den gleichen oder unter unterschiedlichen Winkeln zu drehen.

Gegenstand der vorliegenden Erfindung ist auch eine Siebdruckvorrichtung ausgelegt für den dreidimensionalen Siebdruck, wobei die Siebdruckanlage einen Drucktisch mit den angegebenen Merkmalen umfasst sowie ein Siebwerkzeug, welches oberhalb des Drucktisches angeordnet ist.

Vorzugsweise umfasst das Siebwerkzeug einen Siebrahmen und ein Siebelement, wobei das Siebelement üblicherweise aus einem Verbund aus einem Siebgewebe und einer Beschichtung, in der ein Layout für das zu druckende Bauteil eingearbeitet ist, besteht. Hierdurch entsteht ein beschichtetes Siebgewebe, bei dem einzelne Bereiche für die Druckpaste durchlässig und andere Bereiche die für die Druckpaste undurchlässig sind. Das Siebelement, insbesondere das mit einem Layout versehene beschichtete Siebgewebe ist gespannt und mit dem Siebrahmen fest verbunden. Beispielsweise ist das Siebelement mit dem Siebrahmen verklebt.

Bei einer bevorzugten Ausführungsform der Siebdruckvorrichtung umfassen die wenigstens zwei Segmente jeweils eine Drehachse senkrecht zum Drucktisch, und in dem Siebwerkzeug, insbesondere in dem beschichteten Siebgewebe ist eine Vielzahl von Masken vorgesehen, wobei jedem Segment eine Maske zugeordnet ist. Die Vielzahl von Masken bilden hierbei vorzugsweise das Layout des Siebelements.

Da zur Herstellung eines gedrehten Formkörpers mit einem Querschnitt, dessen Kontur und Größe entlang der Längsachse gleich bleiben, nur eine Rotationsbewegung des Segments gegenüber dem feststehenden Drucktisch und dem feststehenden Siebwerkzeug notwendig ist, bedarf es vergleichsweise weniger Arbeitsschritte, um zur Herstellung des Formkörpers die einzelnen Materiallagen sukzessive aufzutragen. Mit Hilfe dieser Siebdruckvorrichtung kann somit in kurzer Zeit eine Vielzahl von gedrehten Formkörpern hergestellt werden.

Um einen Formkörper zu erhalten, der entlang seiner Mittelachse gedreht ist und dessen Kontur und Größe entlang der Längsachse gleich bleiben, ist es von Vorteil, dass die Maske einen Mittelpunkt aufweist, der sich auf der Drehachse des Segments befindet. Dadurch kann der Herstellungsprozess der Formteile ohne notwendige Anpassungen oder Ausrichtungen der Druckposition des Formteils automatisch ohne Unterbrechung aufgrund eines Wechsels des Siebelements erfolgen.

Bei einer ersten Ausführungsform der Siebdruckvorrichtung ist der Drucktisch als separates Bauteil ausgebildet, welches als Aufsatz auf einem fest montierten Drucktisch der Siebdruckvorrichtung aufliegt.

Alternativ ist der Drucktisch fest in der Siebdruckvorrichtung als eigentlicher Drucktisch montiert. Inhalt der vorliegenden Erfindung ist auch ein Verfahren zur Herstellung eines dreidimensionalen Formkörpers gemäß Anspruch 15.

Vorteilhafte Ausführungsformen werden anhand der beigefügten Zeichnungen näher erläutert, in denen zeigen:
- Fig. 1: den prinzipiellen Aufbau einer Siebdruckanlage;
- Fig. 2: einen Drucktisch in einer Ansicht von oben;
- Fig. 3: eine erste Ausführungsform eines Drucktischs in einer Ansicht von unten;
- Fig. 4: eine erste Ausführungsform einer Verstellvorrichtung;
- Fig. 5: eine zweite Ausführungsform einer Verstellvorrichtung;
- Fig. 6: eine dritte Ausführungsform einer Verstellvorrichtung;
- Fig. 7: eine vierte Ausführungsform einer Verstellvorrichtung;
- Fig. 8: ein Bauteil hergestellt mit einem Drucktisch gemäß Fig. 2;
- Fig. 9: ein weiteres Bauteil hergestellt mit einem Drucktisch gemäß Fig. 2.

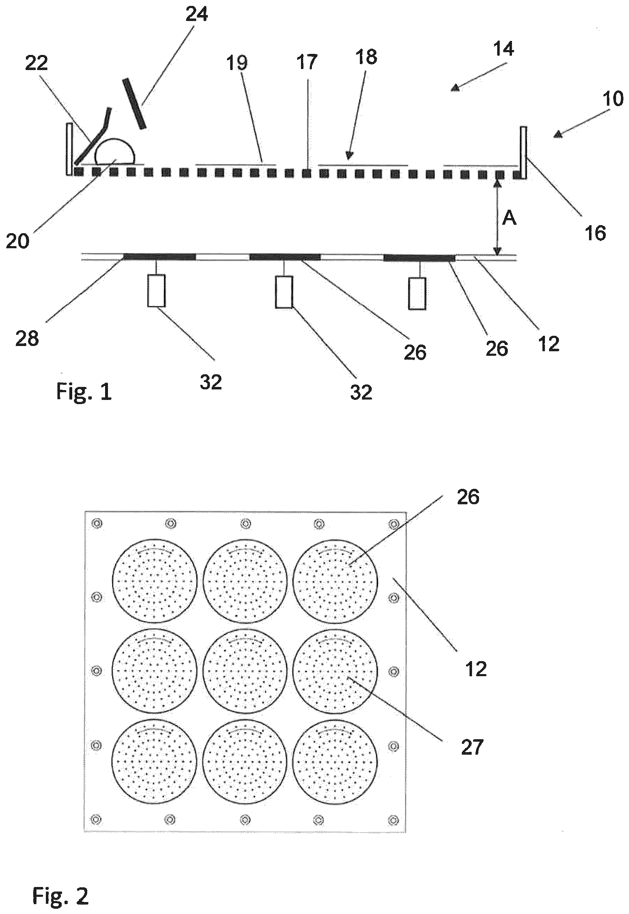

Fig. 1 zeigt den Aufbau einer Siebdruckanlage 10, die für den dreidimensionalen Siebdruck geeignet ist, gemäß einer ersten Ausführungsform. Die Siebdruckanlage 10 umfasst einen Drucktisch 12 und ein Siebwerkzeug 14, wobei das Siebwerkzeug 14 wiederum einen Siebrahmen 16 sowie ein Siebelement 18, bestehend aus einem Siebgewebe 17 und einer auf das Siebgewebe aufgebrachten Beschichtung 19, umfasst. In der Beschichtung ist das Layout des zu druckenden Bauteils eingearbeitet, so dass einzelne Bereiche des Siebgewebes 17 durchlässig und andere Bereiche des Siebgewebes 17 undurchlässig sind. Das Layout kann eine Vielzahl von gleichen oder unterschiedlichen Masken aufweisen. Das mit einer Beschichtung 19 und einem Layout versehene Siebgewebe 17 ist mit dem Siebrahmen 16 fest verbunden, wobei das Siebgewebe 17 gespannt ist.

Das Siebelement 18 befindet sich oberhalb des Drucktisches 12 und ist parallel zur Oberfläche des Drucktisches 12 ausgerichtet. Oberhalb des Siebelements 18 ist eine nicht dargestellte Vorrichtung zur Aufgabe von pastenartigem Substrat 20 auf das Siebelement 18 vorgesehen sowie ein Flutrakel 22 und ein Druckrakel 24.

Bei dem pastenartigen Substrat 20 kann es sich beispielweise um eine Suspension bestehend aus einem Binder mit einem metallischen oder keramischen Pulver handeln. In diesem Fall werden mit Hilfe des Siebdruckverfahrens Grünlinge hergestellt, die üblicherweise nach dem Siebdruckverfahren noch gesintert werden müssen.

Wenn auch nicht dargestellt, so ist eine Höhenverstellvorrichtung vorgesehen, die den Abstand A des Drucktisches 12 gegenüber dem Siebelement 18 bzw. den Absprung, d.h. den Abstand zwischen der Unterseite des Siebelements 18 und dem Grünling, verstellt.

Der Drucktisch 12 umfasst, wie insbesondere in Fig. 2 zu erkennen, eine Vielzahl von kreisrunden Segmenten 26, die drehbar in dem Drucktisch 12 vorgesehen sind. Jedes Segment 26 ist als flache Scheibe ausgebildet und ist um eine Drehachse, die sich im Mittelpunkt des Segments 26 befindet, im Uhrzeigersinn und gegen den Uhrzeigersinn drehbar. Weiterhin ist auf jedem Segment 26 eine Druckposition vorgesehen, so dass auf jedem Segment 26 ein Formkörper herstellbar ist.

Um den zu erzeugenden Formkörper auf dem Segment 26 zu erhalten, sind Mittel zum Fixieren des Formkörpers während des Herstellungsprozesses vorgesehen. Im konkreten Fall werden die zu erzeugenden Formkörper mittels Unterdrucks auf dem Segment 26 gehalten. Hierfür sind Öffnungen 27 parallel zur Drehachse in der Scheibe eingearbeitet, die mit einer unterhalb des Drucktisches vorgesehenen, nicht dargestellten Saugvorrichtung verbunden sind.

Für die Segmente 26 sind im Drucktisch 12 Aussparungen 28 vorgesehen, in denen die scheibenförmig ausgebildeten Segmente 26 passgenau, jedoch mit geringem Spiel eingelassen sind. Die Oberseite der Segmente 26 ist flächenbündig zur Oberseite des Drucktisches 12 ausgebildet, so dass der Drucktisch 12 eine im Wesentlichen ebene Fläche aufweist.

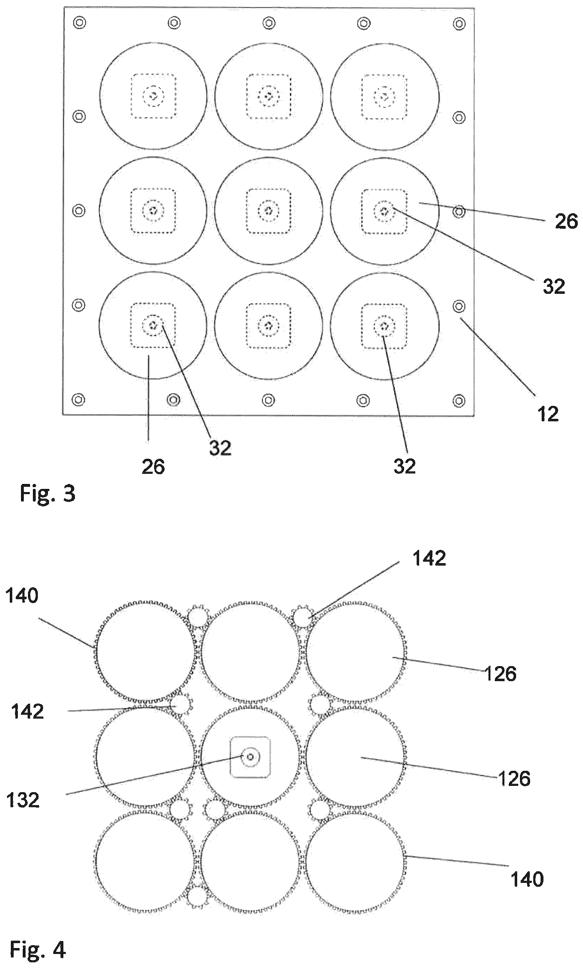

In Fig. 3 ist der in Fig 1 dargestellte Drucktisch 12 von unten gezeigt. Hier ist die Verstellvorrichtung, die ausgelegt ist, die Segmente 26 zu verstellen, zu erkennen. Bei dieser Ausführungsform ist unterhalb jedes Segments 26 ein Motor 32 vorgesehen. Bei dem Motor 32 handelt es sich beispielsweise um einen Schrittmotor. Jedes der in Fig. 3 dargestellten neun Segmente 26 wird einzeln mittels eines Motors 32 angetrieben, wobei die einzelnen Segmente 26 mittels einer nicht dargestellten Steuervorrichtung zentral ansteuerbar sind und somit entweder synchron und im gleichen Winkel oder unabhängig voneinander gedreht werden können.

Fig. 4 zeigt eine weitere Ausführungsform einer Verstellvorrichtung für die neun Segmente 126. Die Verstellvorrichtung umfasst einen Motor 132, der mittels eines Zahnräder umfassenden Getriebes jedes Segment 126 antreibt. Hierfür ist jedes Segment 126 an seiner Unterseite mit einem Zahnrad 140 versehen, wobei das Zahnrad 140 konzentrisch zu dem jeweiligen Segment 126 angeordnet ist. Die einzelnen an der Unterseite der Segmente 126 vorgesehenen Zahnräder 140 sind wiederum durch Verbindungszahnräder 142, die in die an der Unterseite der Segmente 126 vorgesehenen Zahnräder 140 eingreifen, miteinander verbunden. Die Verbindungszahnräder 142 weisen einen kleineren Durchmesser als die Zahnräder 140 an den Segmenten 126 auf. Die Lage der Verbindungszahnräder 144 ist so gewählt, dass alle Zahnräder 140, 144 eine Zahnradkette bilden. So werden alle Segmente 126 gedreht, wenn ein Segment 126 gedreht wird. Zum Antreiben dieser Zahnradkette ist ein Motor 132, insbesondere Schrittmotor vorgesehen. Im vorliegenden Fall ist der Schrittmotor unterhalb des mittigen Segments 126 befestigt. Die Größe der Zahnräder 140, die an der Unterseite der Segmente 126 vorgesehen sind, und der Verbindungszahnräder 142 ist so gewählt und aufeinander abgestimmt, dass die Segmente 126 mittels des Motors 132 synchron und im gleichen Winkel gedreht werden.

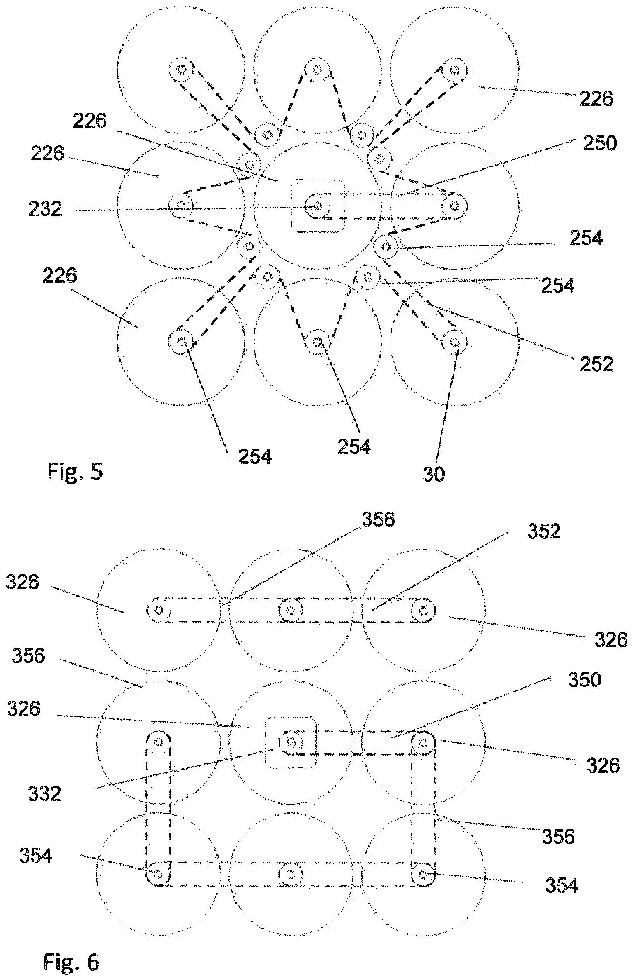

Bei einer in Fig. 5 dargestellten Ausführungsform einer Verstellvorrichtung mit einem Motor 232 und einem Getriebe sind anstelle der in Fig. 4 dargestellten Zahnräder 140, 142 Riemen 250, 252 vorgesehen, die über Riemenscheiben 254 gelenkt werden. Auch hier wird ein zentrales Segment 226 in der Mitte mittels eines Motors 232 angetrieben, wobei dann ein Hauptriemen 250 das Segment 226, an dem sich der Motor 232 befindet, mit einem weiteren Segment 226 verbindet. Dieses Segment 226, welches mit dem Hauptriemen 250 verbunden ist, verbindet dann mittels eines umlaufenden Riemens 252 die verbleibenden Segmente 226. Weiterhin sind Riemenscheiben 254 sowohl an den Segmenten 226 als auch am Drucktisch zwischen den Segmenten 226 vorgesehen. Die Position der Riemenscheiben 254 am Drucktisch zwischen den Segmenten 226 ist so gewählt, dass die einzelnen Segmente 226 synchron, d.h. gleichzeitig und unter dem gleichen Winkel verstellt werden.

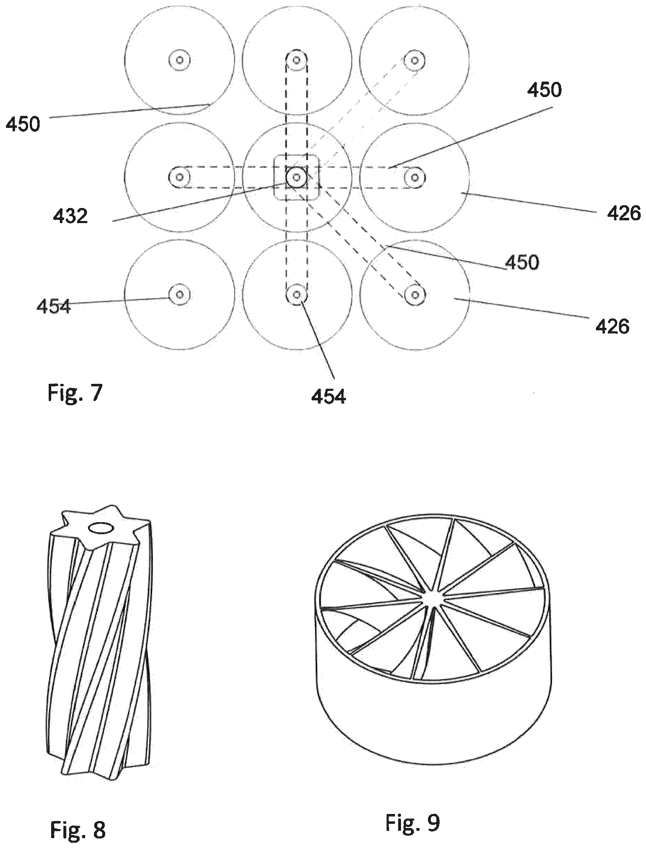

Die Figuren 6 und 7 zeigen Varianten einer Riemenanordnung bei einem Drucktisch mit neun Segmenten.

Bei der in Fig. 6 dargestellten Ausführungsform wird das zentrale mittige Segment 326 mittels eines Motors 332 angetrieben. Über einen Hauptriemen 350 ist das Segment 326, an welchem der Motor 332 vorgesehen ist, mit einem weiteren Segment 326 verbunden. Jedes Segment 326 verfügt über eine Riemenscheibe 354 und ist mit zwei benachbarten Segmenten 326 mittels zweier Verbindungsriemen 356 verbunden. Die Verbindung benachbarter Segmente 326 erfolgt in der Weise, dass eine Riemenkette entsteht, die alle Segmente 326 miteinander verbindet. Mittels der Riemenkette kann der Motor 332 alle Segmente 326 antreiben. Die einzelnen Segmente 326 werden bei dieser Anordnung synchron, d.h. gleichzeitig und unter dem gleichen Winkel verstellt.

Wie bei der in Fig. 7 dargestellten Ausführungsform verfügt das zentrale mittige Segment 426 über einen Motor 432. Jedes Segment hat eine Riemenscheibe 454. Die in Fig. 7 dargestellte Ausführungsform unterscheidet sich von der in Fig. 6 dargestellten Ausführungsform einer Verstellvorrichtung dadurch, dass jedes Segment 426 sternförmig mittels eines Hauptriemens 450 mit dem zentralen mittigen Segment 426 verbunden ist, an dem der Motor 432 befestigt wird. Bei dieser Ausführungsform kann der Motor 432 alle Segmente 426 synchron, d.h. gleichzeitig und unter dem gleichen Winkel verstellen.

In Fig. 8 ist ein Bauteil gezeigt, welches mit Hilfe der vorliegenden Siebdruckanlage hergestellt werden kann.

Der Drucktisch 12 kann in einer Siebdruckanlage 10 integriert sein oder als Aufsatz auf einem bestehenden fest montierten Drucktisch einer Siebdruckanlage aufgesetzt werden.

Zur Herstellung einer Vielzahl von entlang einer Längsachse gedrehten Formkörpern mit Hilfe des Drucktisches 12 wird ein Siebelement 18, welches ein beschichtetes Siebgewebe 19 mit einer Vielzahl von Masken umfasst, vorbereitet. Die Anzahl der Masken entspricht der Anzahl der Segmente 26; 126; 226; 326; 426. Das Siebelement 18 mit dem Siebgewebe 17 und den Masken wird so oberhalb der Segmente 26; 126; 226; 326; 426 positioniert, dass eine Maske oberhalb eines Segments 26; 126; 226; 326; 426 angeordnet ist.

In einem ersten Schritt wird eine erste Materiallage auf das Segment 26; 126; 226; 326; 426 in bekannter Weise aufgetragen und gegebenenfalls weiterbearbeitet, wie etwa getrocknet oder gehärtet. Danach wird der Abstand unter Beibehaltung eines konstanten Absprungs zwischen Drucktisch 12 und Siebelement 18 geändert. Davor, gleichzeitig oder danach werden die Segmente 26; 126; 226; 326; 426 mittels einer der beschriebenen Verstellvorrichtungen synchron verstellt. Nun wird die nächste Materiallage in bekannter Weise auf das Segment 26; 126; 226; 326; 426 aufgebracht und gegebenenfalls weiterbearbeitet. Daraufhin wird der Abstand unter Beibehaltung des konstanten Absprungs zwischen Drucktisch 12 und Siebelement 18 geändert. Davor, gleichzeitig, danach oder nach einer bestimmten Anzahl von Drucklagen werden die Segmente 26; 126; 226; 326; 426 mittels einer der beschriebenen Verstellvorrichtungen wieder synchron verstellt. Dies wird so lange wiederholt, bis die Vielzahl der Formkörper fertig ist.

In den Fig. 8 und 9 sind Formteile gezeigt, die in einer Siebdruckanlage mittels des beschriebenen Drucktisches 12 hergestellt werden können. Es handelt sich um Formteile, die entlang einer Mittelachse gedreht sind.

Ändert sich die Kontur oder die Größe des Querschnitts des Formkörpers entlang seiner Mittelachse nicht, ist kein Wechsel der Siebelemente 18 erforderlich. Ein Wechsel der Siebelemente 18 wäre nur dann notwendig, wenn sich die der Querschnitt hinsichtlich Kontur oder Größe entlang der Längsachse des Formkörpers ändert.

Der Formkörper weist eine ebene Grundfläche auf. Um einen Formkörper mit einer Längsachse zu erhalten, die senkrecht zur seiner Grundfläche verläuft, ist darauf zu achten, dass die mittig durch den Formkörper verlaufende Längsachse eine Verlängerung der Drehachse des Segments bildet.

Wenn auch nicht dargestellt, so können die einzelnen Segmente 26; 126; 226; 326; 426 auch als kreisrunde Teller ausgebildet sein. Weiterhin können die Segmente 26; 126; 226; 326; 426 aus dem Drucktisch herausragen oder in diesen vertieft eingelassen sein.

Zur Betätigung der Verstellvorrichtung, die manuell oder programmgesteuert erfolgen kann, kann die Verstellvorrichtung wie dargestellt einen Motor, insbesondere einen Schrittmotor umfassen. Alternativ kann die Verstellvorrichtung einen anderen Aktuator umfassen, wie etwa pneumatischer Aktuator, hydraulischer Aktuator, piezoelektrischer Aktuator.

Es versteht sich, dass ein Drucktisch eine beliebige Anzahl von Segmenten aufweisen kann und nicht auf die dargestellten neun Segmente beschränkt ist. Der in den Figuren 4 bis 7 dargestellte Motor muss nicht zwangsläufig an dem mittigen oder zentralen Segment befestigt sein. Der Motor kann auch an anderen Segmenten befestigt sein.

Um sicherzustellen, dass der Formkörper während des Herstellungsprozesses sicher auf dem Segment gehalten wird, ist bei den dargestellten Ausführungen vorgesehen, einen Unterdruck auf der Scheibe des Segments zu erzeugen. Bei nicht dargestellten Ausführungsformen können auch andere Mittel zum Fixieren der zu erzeugenden Formkörper vorgesehen sein. Als Mittel zum Fixieren eignen sich beispielsweise auch mechanische Mittel wie etwa Klemmen oder Schrauben. Bei einem geeigneten Substrat oder einer Paste, welches/welche selbst magnetisch ist, können auch magnetische Mittel vorgesehen werden. Alternativ kann der Formkörper während des Herstellungsprozesses mittels Adhäsion gehalten werden.

Es versteht sich, dass die Merkmale der dargestellten Ausführungsformen untereinander kombiniert werden können, wobei einzelne Merkmale der dargestellten Ausführungsformen auch weggelassen werden können.

## Patentansprüche

1. Drucktisch (12) ausgebildet für den Einsatz in einer für den dreidimensionalen Siebdruck ausgelegten Siebdruckvorrichtung, wobei der Drucktisch (12) eine Vielzahl von Druckpositionen aufweist, an denen ein Formkörper erzeugt werden kann, **dadurch gekennzeichnet, dass** der Drucktisch (12) wenigstens zwei Segmente (26; 126; 226; 326; 426) und eine Verstellvorrichtung aufweist, wobei jedes Segment (26; 126; 226; 326; 426) jeweils eine Druckposition enthält und gegenüber dem Drucktisch (12) drehbar ist, und wobei die Verstellvorrichtung ausgelegt ist, die wenigstens zwei Segmente (26; 126; 226; 326; 426) gegenüber dem Drucktisch (12) zu drehen.

2. Drucktisch nach Anspruch 1 **dadurch gekennzeichnet, dass** wenigstens ein Segment (26; 126; 226; 326; 426) eine Drehachse aufweist, die senkrecht zur Oberfläche des Drucktisches (12) ausgerichtet ist.

3. Drucktisch nach einem der vorhergehenden Ansprüche, **dadurch gekennzeichnet, dass** die Verstellvorrichtung ausgelegt ist, die wenigstens zwei Segmente (26; 126; 226; 326; 426) gleichzeitig und/oder unter dem gleichen Winkel zu drehen.

4. Drucktisch nach einem der vorhergehenden Ansprüche, **dadurch gekennzeichnet, dass** die Verstellvorrichtung einen Motor (31; 132; 232; 332; 432), insbesondere einen Schrittmotor umfasst.

5. Drucktisch nach einem der Ansprüche 1 bis 3, **dadurch gekennzeichnet, dass** die Verstellvorrichtung wenigstens einen der folgenden Aktuatoren umfasst: pneumatischer Aktuator, hydraulischer Aktuator, piezoelektrischer Aktuator.

6. Drucktisch nach einem der vorhergehenden Ansprüche, **dadurch gekennzeichnet, dass** die Verstellvorrichtung ein Getriebe umfasst, das ausgelegt ist, die wenigstens zwei Segmente (26; 126; 226; 326; 426) gleichzeitig zu drehen.

7. Drucktisch nach Anspruch 6, **dadurch gekennzeichnet, dass** das Getriebe ein Zahnradsystem oder ein Riemengetriebe ist.

8. Drucktisch nach einem der vorhergehenden Ansprüche, **dadurch gekennzeichnet, dass** wenigstens ein Segment (26; 126; 226; 326; 426) eine kreisförmige Scheibe oder einen kreisförmigen Teller umfasst, der vorzugsweise flächenbündig im Drucktisch (12) angeordnet ist.

9. Drucktisch nach einem der vorhergehenden Ansprüche, **dadurch gekennzeichnet, dass** wenigstens ein Segment (26; 126; 226; 326; 426) ein Mittel zum Fixieren des Formkörpers umfasst.

10. Drucktisch nach einem der vorhergehenden Ansprüche, **dadurch gekennzeichnet, dass** eine Vielzahl von Segmenten (26; 126; 226; 326; 426) vorgesehen ist, die jeweils eine Druckposition enthalten und gegenüber dem Drucktisch (12) drehbar sind, und die Verstellvorrichtung ausgelegt ist, die Vielzahl von Segmenten (26; 126; 226; 326; 426) gegenüber dem Drucktisch (12) zu drehen.

11. Siebdruckvorrichtung ausgelegt für den dreidimensionalen Siebdruck, umfassend einen Drucktisch (12) nach einem der vorhergehenden Ansprüche und ein Siebwerkzeug (14), welches oberhalb des Drucktisches (12) angeordnet ist.

12. Siebdruckvorrichtung nach Anspruch 11, **dadurch gekennzeichnet, dass** die wenigstens zwei Segmente (26; 126; 226; 326; 426) jeweils eine Drehachse senkrecht zum Drucktisch (12) aufweisen und dass in dem Siebwerkzeug (14) eine Vielzahl von Masken vorgesehen sind, wobei jedem Segment (26; 126; 226; 326; 426) eine Maske zugeordnet ist.

13. Siebdruckvorrichtung nach Anspruch 12, **dadurch gekennzeichnet, dass** wenigstens eine Maske symmetrisch ausgebildet ist und einen Mittelpunkt aufweist, wobei der Mittelpunkt der Maske auf der Drehachse des zugeordneten Segments (26; 126; 226; 326; 426) liegt.

14. Siebdruckvorrichtung nach einem der Ansprüche 11 bis 13, **dadurch gekennzeichnet, dass** der Drucktisch (12) als separates Bauteil ausgebildet ist, welches als Aufsatz auf einem fest montierten Drucktisch der Siebdruckvorrichtung aufliegt.

15. Verfahren zur Herstellung eines dreidimensionalen Formkörpers mittels einer Siebdruckvorrichtung nach einem der Ansprüche 11 bis 14, wobei der Formkörper aus einer Vielzahl von Druckschritten hergestellt wird, **dadurch gekennzeichnet, dass** nach einem Druckschritt die wenigstens zwei Segmente (26; 126; 226; 326; 426) gleichzeitig oder unter dem gleichen Winkel gedreht werden oder dass nach einem Druckschritt die wenigstens zwei Segmente (26; 126; 226; 326; 426) gleichzeitig und unter dem gleichen Winkel gedreht werden.

## Claims

1. A printing table (12) designed for use in a screen printing apparatus configured for three-dimensional screen printing, wherein the printing table (12) comprises a plurality of printing positions at which a moulded body can be produced, **characterised in that** the printing table (12) comprises at least two segments (26; 126; 226; 326; 426) and an adjustment device, wherein each segment (26; 126; 226; 326; 426) comprises a printing position and is rotatable relative to the printing table (12), and wherein the adjustment device is designed to rotate the at least two segments (26; 126; 226; 326; 426) relative to the printing table (12).

2. The printing table according to claim 1, **characterised in that** at least one segment (26; 126; 226; 326; 426) has an axis of rotation which is aligned perpendicular to the surface of the printing table (12).

3. The printing table according to any one of the preceding claims, **characterised in that** the adjustment device is designed to rotate the at least two segments (26; 126; 226; 326; 426) simultaneously and/or by the same angle.

4. The printing table according to any one of the preceding claims, **characterised in that** the adjustment device comprises a motor (31; 132; 232; 332; 432), in particular a stepper motor.

5. The printing table according to any one of claims 1 to 3, **characterised in that** the adjustment device comprises at least one of the following actuators: a pneumatic actuator, a hydraulic actuator, a piezoelectric actuator.

6. The printing table according to any one of the preceding claims, **characterised in that** the adjustment device comprises a transmission designed to rotate the at least two segments (26; 126; 226; 326; 426) simultaneously.

7. The printing table according to claim 6, **characterised in that** the transmission is a gear drive or a belt drive.

8. The printing table according to any one of the preceding claims, **characterised in that** at least one segment (26; 126; 226; 326; 426) comprises a circular disc or a circular plate, which is preferably arranged flush with the surface of the printing table (12).

9. The printing table according to any one of the preceding claims, **characterised in that** at least one segment (26; 126; 226; 326; 426) comprises means for securing the moulded body.

10. The printing table according to any one of the preceding claims, **characterised in that** a plurality of segments (26; 126; 226; 326; 426) is provided, each of which contains a printing position and is rotatable relative to the printing table (12), and **in that** the adjustment device is designed to rotate the plurality of segments (26; 126; 226; 326; 426) relative to the printing table (12).

11. A screen-printing apparatus designed for three-dimensional screen printing, comprising a printing table (12) according to any one of the preceding claims and a screen-printing tool (14) arranged above the printing table (12).

12. The screen-printing apparatus according to claim 11, **characterised in that** the at least two segments (26; 126; 226; 326; 426) each have an axis of rotation perpendicular to the printing table (12) and **in that** a plurality of masks are provided in the screen-printing tool (14), with one mask being assigned to each segment (26; 126; 226; 326; 426).

13. The screen-printing apparatus according to claim 12, **characterised in that** at least one mask is symmetrical and has a centre point, wherein the centre point of the mask lies on the axis of rotation of the associated segment (26; 126; 226; 326; 426).

14. The screen-printing apparatus according to any one of claims 11 to 13, **characterised in that** the printing table (12) is designed as a separate component which rests as an attachment on a fixedly mounted printing table of the screen-printing apparatus.

15. A method for producing a three-dimensional moulded body using a screen printing apparatus according to any one of claims 11 to 14, wherein the moulded body is produced in a plurality of printing steps, **characterised in that**, after a printing step, the at least two segments (26; 126; 226; 326; 426) are rotated simultaneously or at the same angle, or **in that**, after a printing step, the at least two segments (26; 126; 226; 326; 426) are rotated simultaneously and at the same angle.

## Revendications

1. Table d'impression (12) conçue pour l'utilisation dans un dispositif de sérigraphie destiné à la sérigraphie tridimensionnelle, la table d'impression (12) présentant une pluralité de positions d'impression où un corps moulé peut être généré, **caractérisée en ce que** la table d'impression (12) comprend au moins deux segments (26 ; 126 ; 226 ; 326 ; 426) et un dispositif de réglage, chaque segment (26 ; 126 ; 226 ; 326 ; 426) contenant respectivement une position d'impression et étant rotatif par rapport à la table d'impression (12), et le dispositif de réglage étant conçu pour faire pivoter les au moins deux segments (26 ; 126 ; 226 ; 326 ; 426) par rapport à la table d'impression (12).

2. Table d'impression selon la revendication 1, **caractérisée en ce qu'**au moins un segment (26 ; 126 ; 226 ; 326 ; 426) présente un axe de rotation qui est orienté perpendiculairement à la surface de la table d'impression (12).

3. Table d'impression selon l'une des revendications précédentes, **caractérisée en ce que** le dispositif de réglage est conçu pour faire pivoter les au moins deux segments (26 ; 126 ; 226 ; 326; 426) simultanément et/ou selon le même angle.

4. Table d'impression selon l'une des revendications précédentes, **caractérisée en ce que** le dispositif de réglage comprend un moteur (31 ; 132 ; 232 ; 332 ; 432), notamment un moteur pas à pas.

5. Table d'impression selon l'une des revendications 1 à 3, **caractérisée en ce que** le dispositif de réglage comprend au moins un des actionneurs suivants : actionneur pneumatique, actionneur hydraulique, actionneur piézoélectrique.

6. Table d'impression selon l'une des revendications précédentes, **caractérisée en ce que** le dispositif de réglage comprend une transmission conçue pour faire pivoter les au moins deux segments (26 ; 126 ; 226 ; 326 ; 426) simultanément.

7. Table d'impression selon la revendication 6, **caractérisée en ce que** la transmission est un système d'engrenages ou une transmission par courroie.

8. Table d'impression selon l'une des revendications précédentes, **caractérisée en ce qu'**au moins un segment (26 ; 126 ; 226 ; 326 ; 426) comprend un disque circulaire ou un plateau circulaire, qui est de préférence disposé affleurant dans la table d'impression (12).

9. Table d'impression selon l'une des revendications précédentes, **caractérisée en ce qu'**au moins un segment (26 ; 126 ; 226 ; 326 ; 426) comprend un moyen de fixation du corps moulé.

10. Table d'impression selon l'une des revendications précédentes, **caractérisée en ce qu'**une pluralité de segments (26 ; 126 ; 226 ; 326 ; 426) est prévue, chacun contenant une position d'impression et étant rotatif par rapport à la table d'impression (12), et le dispositif de réglage étant conçu pour faire pivoter la pluralité de segments (26 ; 126 ; 226 ; 326 ; 426) par rapport à la table d'impression (12).

11. Dispositif de sérigraphie conçu pour la sérigraphie tridimensionnelle, comprenant une table d'impression (12) selon l'une des revendications précédentes et un outil de sérigraphie (14), lequel est disposé au-dessus de la table d'impression (12).

12. Dispositif de sérigraphie selon la revendication 11, **caractérisé en ce que** les au moins deux segments (26 ; 126 ; 226 ; 326 ; 426) présentent respectivement un axe de rotation perpendiculaire à la table d'impression (12) et qu'une pluralité de masques est prévue dans l'outil de sérigraphie (14), chaque segment (26 ; 126 ; 226 ; 326 ; 426) étant associé à un masque.

13. Dispositif de sérigraphie selon la revendication 12, **caractérisé en ce qu'**au moins un masque est symétrique et présente un centre, le centre du masque étant situé sur l'axe de rotation du segment associé (26 ; 126 ; 226 ; 326 ; 426).

14. Dispositif de sérigraphie selon l'une des revendications 11 à 13, **caractérisé en ce que** la table d'impression (12) est conçue comme un composant séparé, lequel repose comme surélévation sur une table d'impression monté de façon fixe du dispositif de sérigraphie.

15. Procédé de fabrication d'un corps moulé tridimensionnel au moyen d'un dispositif de sérigraphie selon l'une des revendications 11 à 14, le corps moulé étant fabriqué à partir d'une pluralité d'étapes d'impression, **caractérisé en ce qu'**après une étape d'impression, les au moins deux segments (26; 126 ; 226 ; 326 ; 426) sont tournés simultanément ou selon le même angle, ou qu'après une étape d'impression, les au moins deux segments (26 ; 126 ; 226 ; 326 ; 426) sont tournés simultanément et selon le même angle.
